Europäisches Patentamt

European Patent Office

Office européen des brevets

(19)

(11) **EP 0 705 444 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(21) Anmeldenummer: **94917553.3**

(22) Anmeldetag: **15.06.1994**

(51) Int Cl.$^6$: **G01S 15/10**, G01S 7/52

(86) Internationale Anmeldenummer:
**PCT/DE94/00670**

(87) Internationale Veröffentlichungsnummer:
**WO 95/00862 (05.01.1995 Gazette 1995/02)**

(54) **VERFAHREN UND VORRICHTUNG ZUR MESSUNG DES ABSTANDES EINES OBJEKTES VON EINER ULTRASCHALL-SENDE-EMPFANGSEINHEIT**

PROCESS AND DEVICE FOR MEASURING THE DISTANCE BETWEEN AN OBJECT AND AN ULTRA-SOUND EMITTING AND RECEIVING UNIT

PROCEDE ET DISPOSITIF DE MESURE DE L'ECARTEMENT ENTRE UN OBJET ET UNE UNITE D'EMISSION ET DE RECEPTION D'ULTRASONS

(84) Benannte Vertragsstaaten:
**CH DE FR GB LI**

(30) Priorität: **22.06.1993 DE 4320698**

(43) Veröffentlichungstag der Anmeldung:
**10.04.1996 Patentblatt 1996/15**

(73) Patentinhaber: **Siemens Aktiengesellschaft 80506 München (DE)**

(72) Erfinder:
• **KROEMER, Nils**
  **D-09337 Hohenstein-Ernstthal (DE)**
• **VOSSIEK, Martin**
  **D-80798 München (DE)**

(56) Entgegenhaltungen:
**EP-A- 0 283 599**            **FR-A- 2 554 579**

**Beschreibung**

Die Erfindung betrifft ein Verfahren und eine Vorrichtung zur Abstandsmessung, welche für Ultraschall-Abstandssensoren, die auf der Basis von Einwandleranordnungen im Impuls-Echo-Betrieb arbeiten, geeignet sind. Die Erfindung ist vorteilhaft einsetzbar für Aufgaben der berührungslosen Abstandsmessung, der Positionsbestimmung von Objekten, sowie der Füllstandsmessung mit großer Meßbereichsdynamik.

Ultraschallabstandssensoren, die nach dem Impuls-Echoverfahren arbeiten, strahlen ein Schallsignal ab und empfangen das am Objekt reflektierte Signal in Form eines Echos. Die Laufzeit des vom Schallsender abgestrahlten akustischen Signals bis zum Eintreffen am Schallempfänger liefert ein Maß für den absoluten Weg, worunter der Weg vom Schallsender zum Objekt und zurück zu verstehen ist. Häufig wird ein einziger Schallwandler zum wechselseitigen Senden und Empfangen verwendet. Das reflektierte Schallsignal kann allerdings erst dann empfangen werden, wenn der Sendevorgang hinreichend abgeklungen ist. Aus diesem Grund besitzen Ultraschallsensoren, welche mit einem einzigen Wandler arbeiten, stets eine Nichteindeutigkeitszone, deren Ausdehnung sowohl von den Wandlereigenschaften als auch von der Anregungsfunktion abhängt. Diese prinzipbedingte Nichteindeutigkeitszone ist für viele praktische Anwendungen nachteilig, da einerseits der Meßbereich dahingehend eingeschränkt wird, daß Echosignale deren Laufzeit kleiner ist als die der Nichteindeutigkeitszone entsprechende Zeit, nicht mehr erkannt werden und andererseits bei erkannten Echos nicht mehr feststellbar ist, ob es sich bei dem ersten tatsächlich erkannten Echo um das Grundecho oder um ein durch Mehrfachreflexion entstandenes Echo, ein sogenanntes Mehrfachecho, handelt. Dies kann zu großen Meßfehlern führen, wenn ein vorgegebener minimaler Abstand zwischen dem Ultraschall (US) -Abstandssensor und dem Meßobjekt unterschritten wird.

Bekannt sind Verfahren und Schaltungsanordnungen, mit denen die Nichteindeutigkeitszone des Wandlers minimiert werden soll. Wie in DE 33 39 984 und in US-36 83 324 beschrieben, besteht die Lösung des Problems darin, daß mittels eines steuerbaren Verstärkers die Amplitude des abklingenden Übersprechsignals nach dem Sendevorang soweit reduziert wird, daß ein bestimmter Schwellwert nicht überschritten wird. Echos aus dem Nahbereich, die über diesem Schwellwert liegen, können hingegen detektiert werden.

Eine andere Lösung besteht darin, die Ausschwingzeit dadurch zu verkürzen, daß der Wandler nach dem Sendevorgang mit gegenphasigen Impulsen angeregt und damit abgebremst wird. Zeitlich optimal kurze Echosignale erhält man durch Anregung des Schallwandlers mit dem der inversen Wandlerübertragungsfunktion entsprechenden Zeitsignal, beispielsweise nach Mágori, V.: Signal processing for smart ultrasonic sensors. Proc. 3rd Annual European Computer Conference, Hamburg, May 1989, pp 3 - 21 to 3 - 26. Aufgrund der vergleichsweise langen zeitlichen Ausdehnung des inversen Anregungssignals wird die Nichteindeutigkeitszone des Sensors hierbei jedoch kaum verringert.

Für Meßaufgaben bei denen vor allem kleine Abstände von Interesse sind werden vorzugsweise sehr breitbandige Ultraschallwandler verwendet, welche sich von Natur aus durch sehr kurze Ausschwingzeiten auszeichnen.

Die genannten Lösungen zur Verkürzung der Nichteindeutigkeitszone bleiben jedoch mit dem Nachteil behaftet, daß Echos innerhalb dieser Nichteindeutigkeitszonen nicht detektierbar sind und somit Fehlmessungen ausgelöst werden können.

Bekannt sind Ultraschall-Abstandssensoren mit einem einzigen Wandler, bei denen der Wandler im Sensorkopf so angeordnet ist, daß die Nichteindeutigkeitszone des Wandlers durch eine angepaßte Schall-Vorlaufstrecke innerhalb des Sensorkopfes kompensiert wird, wie in DE 83 32 005 beschrieben. Auf diese Weise werden Fehlmessungen infolge mehrdeutiger Echos verhindert, da das Meßobjekt einen minimalen Abstand zum Wandler nicht unterschreiten kann. Die Vorlaufstrecke kann dabei gerade oder abgewinkelt sein. Nachteilig ist in jedem Fall die prinzipbedingte Vergrößerung der Bauform des Sensorkopfes.

Bekannt sind außerdem Verfahren zum Plausibilitätstest der Meßergebnisse von Abstandssensoren, welche aufgrund der zeitlichen Entwicklung des Echos Fehlmessungen unterdrücken. Allerdings können diese Verfahren nicht angewandt werden, falls der Sensor abgeschaltet wird und die Situation sich zwischenzeitlich ändert, was in der Praxis häufig der Fall ist.

Bekannt sind weiterhin Ultraschall-Abstandssensoren mit getrennten Wandlern zum Senden und Empfangen. Nachteilig hierbei sind jedoch der erhöhte Aufwand, die Vergrößerung der Bauform sowie vor allem im Nahbereich das Auftreten von Parallaxefehlern infolge der unterschiedlichen Positionen der Wandler.

Diesen Lösungen ist gemeinsam, daß entweder der Abstand zwischen Schallwandler und Reflektor einen festgelegten Wert nicht unterschreiten darf, um Fehlmessungen zu vermeiden, oder aber getrennte Wandler zum Senden und Empfangen vorhanden sein müssen.

Die Aufgabe der Erfindung ist es, ein Verfahren und eine Vorrichtung zur Abstandsmessung mittels Ultraschall anzugeben, insbesondere zur Messung von Abständen, die im Bereich der Nichteindeutigkeitszone der US-Sende-Empfangseinheit liegen. Ein Vorteil der Erfindung ist es, Fehlmessungen erkennen und entsprechend handhaben zu können.

Die Aufgabe wird durch ein Verfahren und eine Vorrichtung gemäß dem Patentanspruch 1 bzw. 8 gelöst.

Vorteilhafte Weiterbildungen der Erfindung sind durch die in den Unteransprüchen angegebenen Merkmale gekennzeichnet.

Zur Lösung der Aufgabe ist zuerst die Bewertung der zeitlichen Lage des ersten detektierten Echos heranzuziehen, weil die zeitliche Lage eine Aussage über die Eindeutigkeit des Meßsignals liefern kann. Liegt der Zeitpunkt für das Eintreffen eines ersten detektierten Echos $t_{e1}$ außerhalb der doppelten Totzeit $2t_T$ der Vorrichtung - die Vorrichtung wird im nachfolgenden auch als Sensor bezeichnet - so kann kein vorheriges Echo desselben Objektes innerhalb der Totzeit $t_T$ aufgetreten sein. Der Meßabstand kann dem Objekt eindeutig zugeordnet werden. Wenn der Zeitpunkt für das Eintreffen des ersten Echos $t_{e1}$ innerhalb der doppelten Totzeit $2t_T$ des Sensors liegt, so ist eine eindeutige Zuordnung der Laufzeit zwischen Objekt und Ultraschall-Sende-Empfangseinheit nicht mehr möglich. Aus diesem Grund ist es sinnvoll, zumindest den Zeitpunkt $t_{e2}$ für das Eintreffen eines darauffolgenden Mehrfachechos desselben Objektes zu bestimmen. Die interessierende Laufzeit $t_L$ von der Ultraschall-Sende-Empfangseinheit zum Meßobjekt und zurück ergibt sich dann als die Differenz zwischen den Zeitpunkten $t_{e2}$ und $t_{e1}$.

Im folgenden wird die Erfindung anhand der Zeichnungen näher erläutert.

Figur 1     zeigt eine Meßsituation und die dazu korrespondierenden Signalverläufe für ein außerhalb der doppelten Totzeit $2t_T$ auftretendes Echo des Meßobjekts.

Figur 2     zeigt eine Meßsituation mit den dazugehörigen Signalverläufen, wobei das erste Echo zwischen der einfachen Totzeit $t_T$ und der doppelten Totzeit $2t_T$ der Ultraschall-Sende-Empfangseinheit liegt.

Figur 3     zeigt eine Meßsituation und die dazu korrespondierenden Signalverläufe, wobei mehrere Echos während der doppelten Totzeit $2t_T$ auftreten.

Figur 4     zeigt eine Meßsituation und die dazugehörigen Signalverläufe, wobei außerhalb der Totzeit $t_T$ keine Echos mehr auftreten.

Figur 5     zeigt einen möglichen Aufbau einer Vorrichtung zur Abstandsmessung.

Figur 6     zeigt ein weiteres Ausführungsbeispiel einer Vorrichtung zur Abstandsmessung.

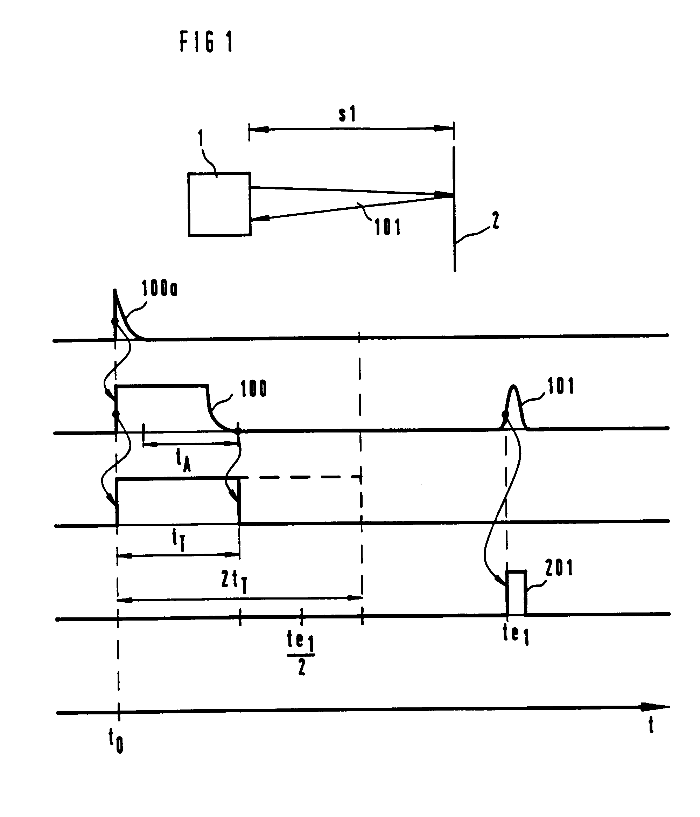

Bei der in Figur 1 dargestellten Meßsituation befindet sich das Meßobjekt 2 in einem Abstand sl zu der US-Sende-Empfangseinheit 1. Der Abstand sl ist dabei so groß, daß das reflektierte Signal 101 des Sende-Impulses 100 außerhalb der doppelten Nichteindeutigkeitszone der US-Sende-Empfangseinheit 1 liegt. Die Nichteindeutigkeitszone ergibt sich generell aus der doppelten Totzeit $2t_T$. Durch den Sendeimpuls 100a wird das Schallsignal 101 - auch als Echo bezeichnet - erzeugt, welches nach der Reflexion am Meßobjekt 2 zurück zur US-Sende-Empfangseinheit 1 gelangt. In der Figur ist dabei das Schallsignal 101 als demodulierte Hüllkurve dargestellt. Das Echo 101 wird in einen Impuls 201 umgesetzt, wobei dessen vordere Flanke den Zeitpunkt $t_{e1}$ des Empfangs des Echos 101 kennzeichnet. Während des Sendevorgangs und der Abklingzeit $t_A$ des Schallwandlers ist der Echoempfang durch das Übersprechsignal 100 blockiert. Die Totzeit $t_T$ des Sensors ergibt sich aus der Summe der Anregungsdauer und der Abklingzeit $t_A$ der US-Sende-Empfangseinheit. Da in Figur 1 die Zeitdifferenz $t_{e1} - t_o$ ($t_o$ ist der Referenzzeitpunkt) größer als die doppelte Totzeit $2t_T$ ist, kann kein vorheriges Echo innerhalb der Totzeit $t_T$ "verschluckt" worden sein. Das erste Echo wäre sonst bei $t_{e1}/2$ aufgetreten. Da aber nach Verstreichen der Totzeit $t_T$ Echosignale detektiert werden und $t_{e1}/2$ größer als $t_T$ ist, hätte dieses erste Echo empfangen werden müssen. Die Messung liefert somit ein eindeutiges Ergebnis. Für die Laufzeit $t_L$ des Echos 101, welche proportional zum absoluten Weg zwischen der Ultraschall-Sende-Empfangseinheit 1 und dem Meßobjekt 2 ist, gilt:

$$t_L = t_{e1} - t_o.$$

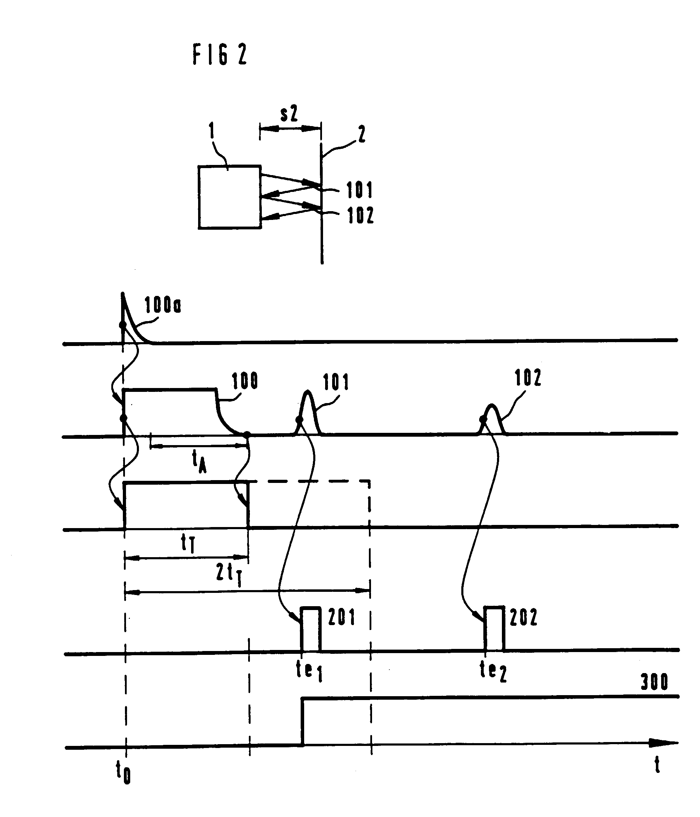

Bei der in Figur 2 gezeigten Meßsituation befindet sich das Meßobjekt 2 im Abstand s2 zur Ultraschall-Sende-Empfangseinheit 1. Der Abstand s2 ist so klein, daß die Laufzeit des ersten Echos 101 kleiner als die doppelte Totzeit $2t_T$ ist. Innerhalb der dargestellten Zeitdauer werden nunmehr zwei Echos 101 und 102 empfangen. Das Echo 101 stellt das Grundecho dar. Das Echo 102 kommt durch eine Mehrfachreflexion zustande. Beide Echos 101 und 102 werden in die Impulse 201 bzw. 202 umgesetzt, wobei deren vordere Flanken die Zeitpunkte $t_{e1}$ bzw. $t_{e2}$ des Empfangs der Echos 101 bzw. 102 kennzeichnen. Weil der Zeitpunkt $t_{e1}$ des Eintreffens des ersten Echos 101 innerhalb der doppelten Totzeit $2t_T$ liegt, wird ein Sensorsteuersignal 300 generiert, welches entweder zur Aktivierung einer Fehlermeldung oder zur Freigabe der Detektion weiterer Echos, z.B. des Echos 102 genutzt werden kann. Bei der Detektion des weiteren Echos 102 bestimmt sich die Schallaufzeit $t_L$ von der US-Sende-Empfangseinheit 1 zum Meßobjekt 2 und zurück, aus der Zeitdifferenz des Auftretens der beiden Echos 101 und 102.

Im dargestellten Fall gilt:

$$t_{e2} - t_{e1} = t_{e1} - t_o = t_L .$$

Allgemein kann bei der Detektion weiterer Echos die Zeitdifferenz zwischen zwei aufeinanderfolgenden Echos zur Bestimmung der Schallaufzeit $t_L$ von der Ultraschall-Sende-Empfangseinheit 1 zum Meßobjekt 2 und zurück, ermittelt werden.

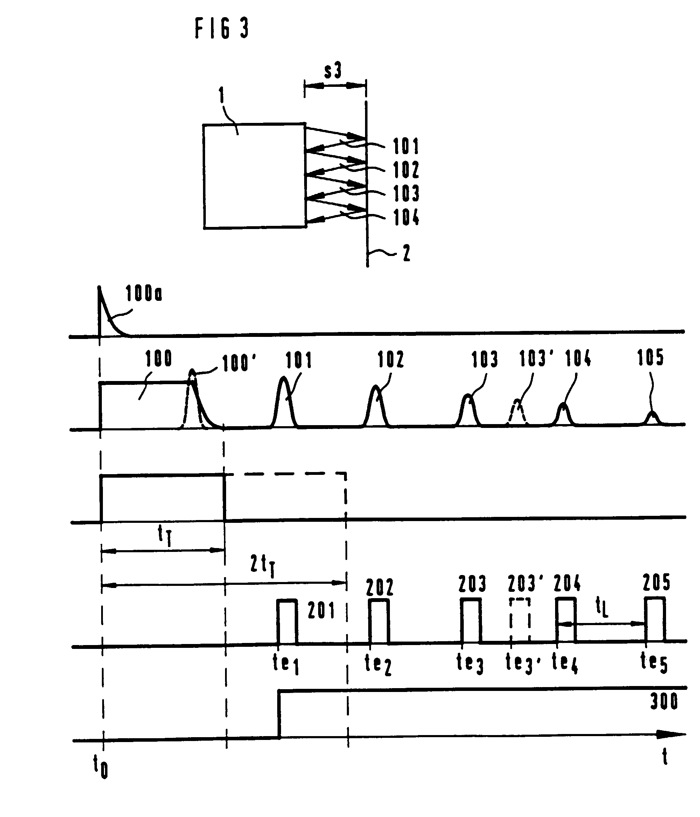

Bei der in Figur 3 dargestellten Situation befindet sich das Meßobjekt 2 im Abstand s3 zur Ultraschall-Sende-Empfangseinheit 1. Durch den kleinen Abstand s3, welcher kürzer als der Abstand s2 ist, wird bewirkt, daß das erste Echo 100 bereits vor Ablauf der Totzeit $t_T$ an der Ultraschall-Sende-Empfangseinheit 1 eintrifft. Da während der Totzeit $t_T$ keine Echos detektiert werden können, wird dieses Echo 100' von der Ultraschall-Sende-Empfangseinheit 1 nicht registriert. Weil die Zeitdifferenz des Zeitpunkts $t_{e1}$ des ersten detektierten Echos 101 und des Referenzzeitpunkts $t_o$ kleiner als die doppelte Totzeit $2t_T$ ist, wird ein Sensorsteuersignal 300 generiert, welches wiederum zur Aktivierung einer Fehlermeldung oder zur Freigabe der Detektion weiterer Echos z.B. 102, 103, 104 und 105 genutzt werden kann. Die Echos werden in die Impulse 201 ... 205 umgesetzt. Bei der Detektion weiterer Echos, z.B. 102 ...105 kann die Zeitdifferenz zwischen zwei aufeinanderfolgenden Echos, z.B. 102 und 103 zur Bestimmung der Schallaufzeit $t_L$ von der Ultraschall-Sende-Empfangseinheit 1 zum Meßobjekt 2 und zurück ermittelt werden. Im dargestellten Fall gilt:

$$t_L = t_{e5} - te_4 = te_4 - te_3 = t_{e3} - te_2 = t_{e2} - t_{e1} \neq t_{e1} - t_o$$

oder allgemein:

$$t_L = t_{ei+1} - t_{ei} \neq t_{e1} - t_o.$$

$t_{e1}$ ... $t_{e5}$ = Zeitpunkt des Auftretens der Echos 101 ... 105 i = Echoindex
Weil $t_{e1}$ der Zeitpunkt des ersten detektierten Echos und nicht der Zeitpunkt des ersten auftretenden Echos ist, gilt:

$$t_{e1} - t_o \neq t_L.$$

Zur Erhöhung der Meßgenauigkeit kann der Mittelwert aus den sich ergebenden Zeitdifferenzen gebildet werden:

$$t_L = 1/(n-1) \cdot \sum_{i=1}^{n-1} t_{ei+1} - t_{ei}$$

wobei n für die Anzahl der detektierten Echos steht.

Das Signal 103' repräsentiert ein Störsignal. Bei der Bildung der Zeitdifferenz zwischen jeweils zwei aufeinander folgenden Echos folgt:

$$t_{e3'} - t_{e3} \neq t_{e4} - t_{e3'} \neq t_{e2} - t_{e1}.$$

Diese Abweichungen können die Ausgabe einer entsprechenden Fehlermeldung bewirken. Oder aber es wird der erkannte Meßfehler bei der Mittelwertbildung nicht berücksichtigt.

Eine zu große Streuung der Zeitdifferenzen $t_{ei+1} - t_{ei}$ bewirkt, daß die entsprechende Zeitdifferenz nicht zur Mittelwertbildung herangezogen wird.

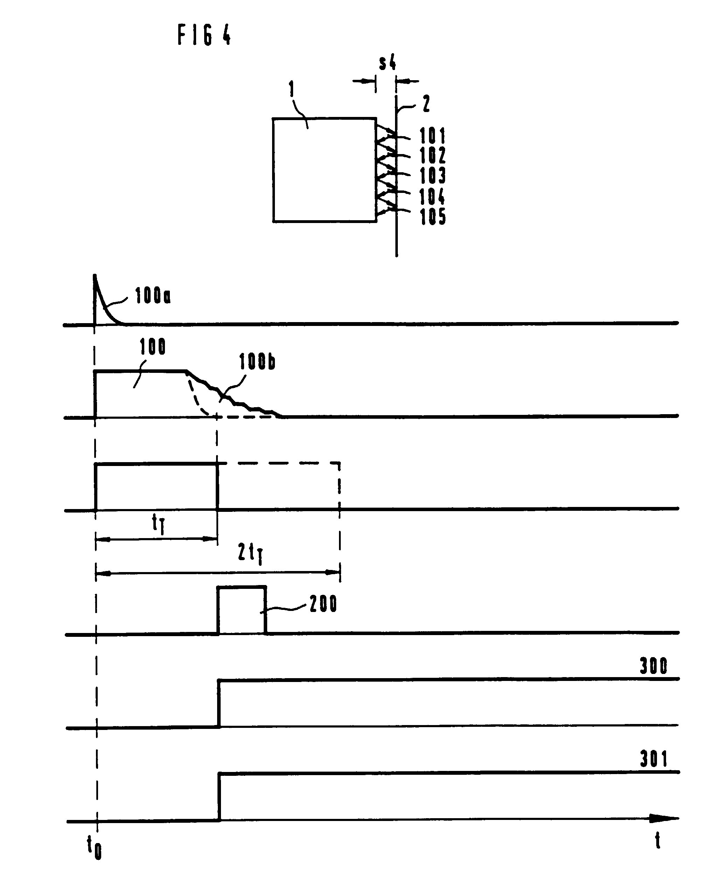

Bei der in Figur 4 gezeigten Meßsituation ist der Abstand s4 zwischen der Ultraschall-Sende-Empfangseinheit 1 und dem Meßobjekt 2 so klein, daß die Echos 101, 102... 105 unterschiedlicher Ordnung interferieren, so daß im Empfangssignal nur noch ein überlagertes Echosignal 100b detektiert wird, wobei die Einzelechos nicht mehr separiert sind. Aufgrund der Lage und Zeitdauer des in einem Impuls 200 umgesetzten Meßsignals wird neben dem Sensorsteuersignal 300 ein Fehlersignal 301 generiert, welches das Unterschreiten des minimalen Meßbereiches des Sensors anzeigt.

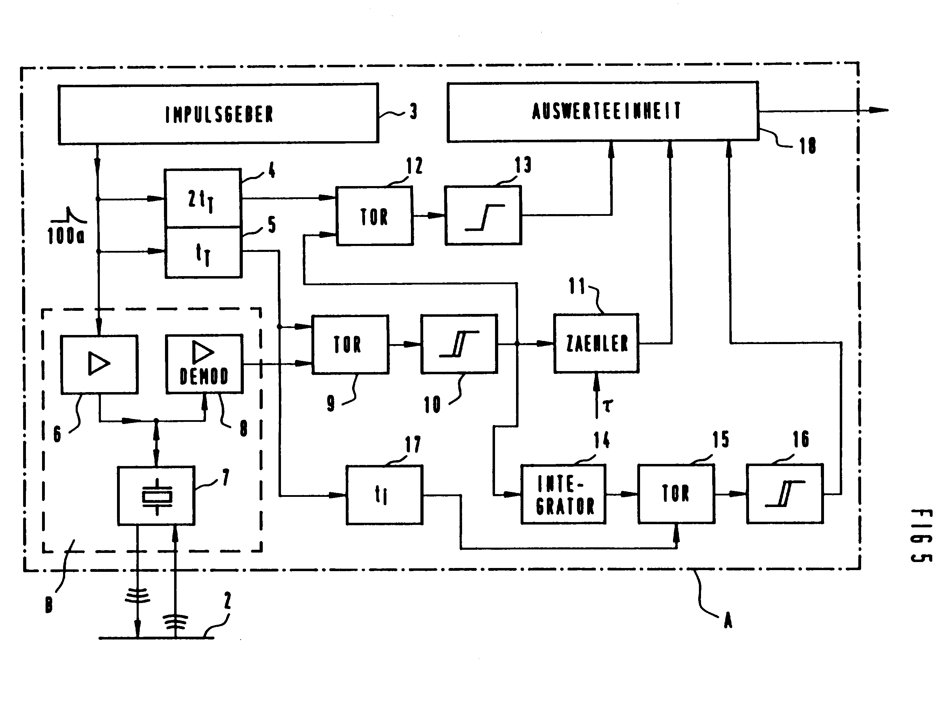

Figur 5 zeigt das Blockschaltbild einer möglichen Sensorausführung A. Vom Impulsgeber 3 wird ein Sendeimpuls 100 generiert, welcher über den Sendeverstärker 6 an den Ultraschallwandler 7 gegeben wird. Aus dem vom Meßobjekt 2 reflektierten Schallsignal wird mittels der Verstärker/Demodulatorschaltung 8 die Hüllkurve gebildet. Der Sendeverstärker 6, der Ultraschallwandler 7 und die Verstärker/Demodulatorschaltung 8 bilden zusammen die Ultraschall-Sende-Empfangseinheit B. Nach Ablauf der Totzeit $t_T$ der US-Sende-Empfangseinheit B wird mittels des Zeitglieds 5 eine Torschaltung 9 freigegeben, so daß alle nach dieser Totzeit $t_T$ eintreffenden Echos von dem Meßkomparator 10 in digitale Impulse 201, 202,... umgesetzt werden. Diese digitalen Impulse 201, 202 steuern die mit dem Takt $\tau$ arbeitende Zählerbaugruppe 11, so daß mit jeder vom Komparator 10 kommenden positiven Impulsflanke der aktuelle Zählerstand in die Auswerteeinheit 18 übernommen werden kann.

Mit dem Sendeimpuls 100 wird ein zweiter Zeitgeber 4 aktiviert, welcher die Torschaltung 12 für die vom Meßkomparator 10 erzeugten Impulse für die Dauer der doppelten Totzeit $2t_T$ freigibt. Anschließend wird das Tor 12 gesperrt. Wird ein Echo vor Ablauf der doppelten Totzeit $2t_T$ detektiert, so wird das Flip-Flop 13 getriggert und das Sensorsteuer-Signal 300 aktiviert.

Im Anschluß an die vom ersten Zeitgeber 5 vorgegebene Totzeit $t_T$ wird ein Totzeitglied 17 aktiviert, welches nach Ablauf der Zeit $t_i$ eine weitere Torschaltung 15 freigibt. Wenn der Abklingvorgang verzögert wird, was zur Folge hat, daß die Abklingdauer $t_A$ und die Sendedauer zusammen länger dauern als die Totzeit $t_T$ des Sensors oder die Abklingzeit $t_A$ von der Sollabklingzeit abweicht, so liefert ein Integrator 14 einen Integrationswert entsprechend der Impulslänge des Signals, das am Ausgang des Meßkomparators 10 anliegt. Der Integrationswert wird bei offenem Tor 15 von dem nachgeschalteten Komparator 16 in das Fehlersignal 301 umgesetzt.

Die Auswertung der Schallaufzeit $t_L$ erfolgt in der Auswerteeinheit 3 anhand der vom Zählerbaustein 11 übernommenen Werte.

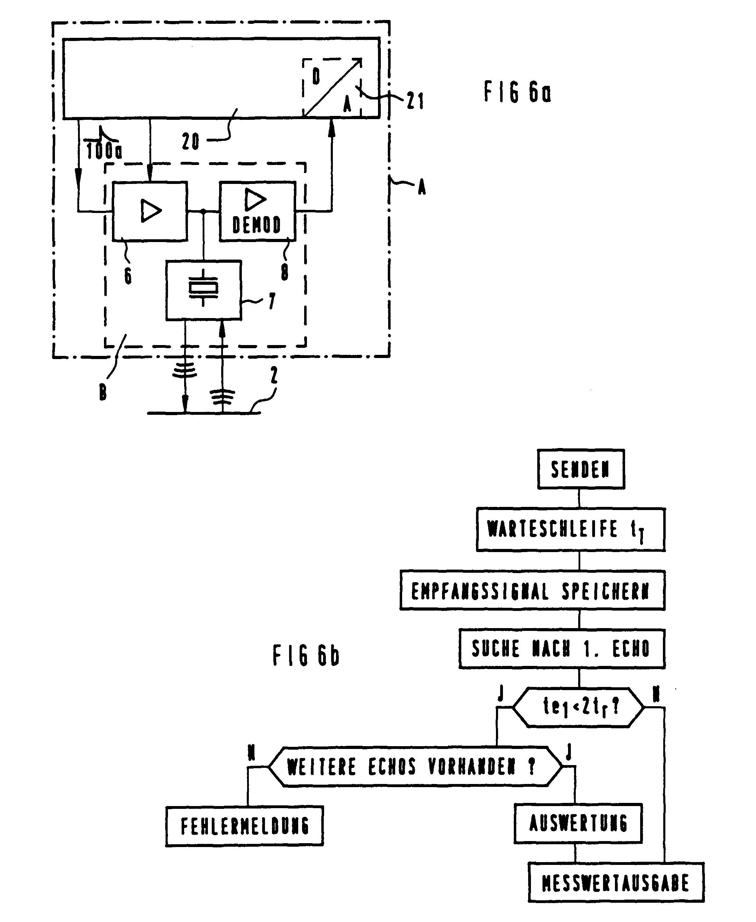

Figur 6a zeigt schließlich das Blockschaltbild eines Sensors A mit einem Mikrokontroller 20 als Steuer- und Auswerteeinheit. Der Mikrokontroller 20 generiert einen Sendeimpuls 100, welcher über den Verstärker 6 an den Ultraschallwandler 7 gegeben wird. Die vom Meßobjekt 2 reflektierten Schallsignale 101, 102, ... werden in der Verstarker-/ Demodulatorbaugruppe 8 demoduliert, so daß am Eingang der Analog/Digitalwandlereinheit 21 des Mikrokontrollers 20 die Hüllkurve der Echosignale 101, 102, ... zur Verfügung steht. Die Auswertung der detektierten Echos 101, 102, ... erfolgt mittels eines geeigneten Auswerteprogramms. In Figur 6b ist ein entsprechendes Programmablauf schema dargestellt. Zu Beginn wird ein US-Signal ausgesandt. Weil während der Totzeit $t_T$ kein Echo detektiert werden kann, wird eine Warteschleife mit einer entsprechenden Zeitdauer $t_T$ durchlaufen. Nach der Aufzeichnung des Empfangssignals wird zunächst der Zeitpunkt $t_{e1}$ des ersten Echos 101 bestimmt. Befindet es sich außerhalb der doppelten Totzeit $2t_T$, so ist die Messung eindeutig und der Meßwert kann ausgegeben werden. Andernfalls wird überprüft, ob weitere Echos vorhanden sind. Sind weitere Echos vorhanden, so wird die Schallaufzeit $t_L$ aus der Differenz der Zeitpunkte des Auftretens zweier aufeinanderfolgender Echos bestimmt. Zur Steigerung der Genauigkeit kann auch der Mittelwert aus den Differenzen der Zeitpunkte des Auftretens mehrerer aufeinanderfolgender Echos gebildet werden. Sind keine weiteren Echos vorhanden, so wird eine entsprechende Fehlermeldung ausgegeben.

Das System wurde am Beispiel eines schmalbandigen 200kHz-Luft-Ultraschall-Abstandssensors getestet. Das System läßt sich insbesondere auch auf Füllstandsmeßeinrichtungen für Flüssigkeiten übertragen, da dort in aller Regel nur ein einziges, klardefiniertes Meßobjekt in Form der Grenzfläche Luft-Flüssigkeit vorhanden ist. Die Zuverlässigkeit und Meßsicherheit derartiger Niveausensoren wird durch die erfindungsgemäße Lösung bei geringem Aufwand deutlich verbessert.

**Patentansprüche**

1.  Verfahren zur Messung des Abstandes eines Objektes von einer Ultraschall-Sende-Empfangseinheit, wobei

    -   die Ultraschall (US)-Sende-Empfangseinheit (1) zur Abstrahlung eines US-Impulses veranlaßt wird dadurch **gekennzeichnet**,
    -   daß der Zeitpunkt $t_{e1}$ des Empfangs eines ersten US-Echos (101) registriert wird und
    -   daß der Zeitpunkt $t_{e2}$ des Empfangs eines dem ersten US-Echo (101) nachfolgenden zweiten US-Echos (101) registriert und die Zeitdifferenz $t_{e2} - t_{e1}$ zur Bestimmung des Abstands herangezogen wird, sofern das erste US-Echo (101) nicht innerhalb eines vorgegebenen Zeitintervalls nach der Abstrahlung des US-Impulses auftritt.

2.  Verfahren nach Anspruch 1,
    dadurch **gekennzeichnet**,
    daß der Zeitpunkt $t_{e1}$ des Empfangs des ersten US-Echos (101) zur Bestimmung des Abstandes herangezogen wird, sofern das erste US-Echo (101) nicht innerhalb des vorgegebenen Zeitintervalls auftritt.

3. Verfahren nach Anspruch 1 oder 2,
dadurch **gekennzeichnet**,
daß das Zeitintervall proportional zur Totzeit ($t_T$) der US-Sende-Empfangseinheit (1) gewählt wird.

4. Verfahren nach Anspruch 3,
dadurch **gekennzeichnet**,
daß das Zeitintervall der zweifachen Totzeit ($2t_T$)entspricht.

5. Verfahren nach einem der vorigen Ansprüche,
dadurch **gekennzeichnet**,

- daß weitere Empfangs-Zeitpunkte ($t_{e3}$, $t_{e4}$...) von weiteren Echos (103, 104...) registriert werden,
- daß die Zeitdifferenzen jeweils zweier aufeinanderfolgender Echos zur Bestimmung einer mittleren Zeitdifferenz herangezogen werden,
- daß die mittlere Zeitdifferenz zur Bestimmung des Abstandes herangezogen wird.

6. Verfahren nach einem der vorigen Ansprüche,
dadurch **gekennzeichnet**,

- daß weitere Empfangs-Zeitpunkte von weiteren Echos registriert werden,
- daß bei einer Abweichung der Zeitdifferenzen jeweils zweier aufeinanderfolgender Echos voneinander die Abweichung registriert wird.

7. Verfahren nach einem der vorigen Ansprüche,
dadurch **gekennzeichnet**,
daß eine Registrierung erfolgt, wenn eine für die US-Sende-Empfangseinheit spezifische Abklingzeit ($t_A$)von einer Sollabklingzeit abweicht.

8. Vorrichtung zur Abstandsmessung (A), die

- einen Impulsgeber (3)
- eine Ultraschall-Sende-Empfangseinheit (B) aufweist, gekennzeichnet dadurch, daß die Vorrichtung auch
- ein erstes Totzeitglied (5) mit einfacher Totzeit ($t_T$),
- eine erste Torschaltung (9),
- einen ersten Komparator (10),
- und einen Zähler (11) aufweist,
- bei der der Impulsgeber (3) die Ultraschall-Sende- Empfangseinheit (B) und das erste Totzeitglied (5) ansteuert,
- bei der die Ultraschall-Sende-Empfangseinheit (B) und das erste Totzeitglied (5) die erste Torschaltung (9) ansteuern,
- bei der die erste Torschaltung (9) den ersten Komparator (10) ansteuert,
- und bei der der erste Komparator (10) den Zähler (11) ansteuert.

9. Vorrichtung nach Anspruch 8,
die des weiteren

- ein zweites Totzeitglied (4) mit zweifacher Totzeit ($2t_T$),
- eine zweite Torschaltung (12) und
- eine Speicherschaltung (13) aufweist,
- bei der der Impulsgeber (3) zusätzlich das zweite Totzeitglied (4) ansteuert,
- bei der das zweite Totzeitglied (4) und der erste Komparator (10) die zweite Torschaltung (12) ansteuern,
- bei der die zweite Torschaltung (12) die Speicherschaltung (13) ansteuert.

10. Vorrichtung nach Anspruch 8 oder Anspruch 9,
die des weiteren

- ein drittes Totzeitglied (17) mit der Totzeit ($t_i$),
- einen Integrator (14),

- eine dritte Totschaltung (15) und
- einen zweiten Komparator (16) aufweist,
- bei der das erste Totzeitglied (5) das dritte Totzeitglied (17) ansteuert,
- bei der das dritte Totzeitglied (17) und der Integrator (14) die dritte Torschaltung (15) ansteuern,
- bei der die dritte Torschaltung (15) den zweiten Komparator (16) ansteuert, und
- bei der der erste Komparator (10) zusätzlich den Integrator (14) ansteuert.

**Claims**

1. Method for measuring the distance of an object from an ultrasonic transmission/reception unit,

   - the ultrasonic (US) transmission/reception unit (1) being caused to transmit an ultrasonic pulse, characterized in that
   - the time $t_{e1}$ at which a first ultrasonic echo (101) is received is registered, and
   - the time $t_{e2}$ at which a second ultrasonic echo (102), following the first ultrasonic echo (101), is received is registered, and the time difference $t_{e2} - t_{e1}$ is used to determine the distance, insofar as the first ultrasonic echo (101) does not appear within a predetermined time interval after transmission of the ultrasonic pulse.

2. Method according to Claim 1, characterized in that the time $t_{e1}$ at which the first ultrasonic echo (101) is received is used to determine the distance, insofar as the first ultrasonic echo (101) does not appear within the predetermined time interval.

3. Method according to Claim 1 or 2, characterized in that the time interval is selected as proportional to the dead time ($t_T$) of the ultrasonic transmission/reception unit (1).

4. Method according to Claim 3, characterized in that the time interval corresponds to two times the dead time ($2t_T$).

5. Method according to one of the preceding claims, characterized in that

   - further reception times ($t_{e3}$, $t_{e4}$ ...) of further echoes (103, 104 ...) are registered,
   - the time differences of, in each case, two successive echoes are used to determine a mean time difference,
   - the mean time difference is used to determine the distance.

6. Method according to one of the preceding claims, characterized in that

   - further reception times of further echoes are registered,
   - if the time differences of, in each case, two successive echoes deviate from one another, the deviation is registered.

7. Method according to one of the preceding claims, characterized in that, if a recovery time ($t_A$) specific to the ultrasonic transmission/reception unit deviates from a set recovery time, this fact is registered.

8. Device (A) for distance measurement, which has

   - a pulse generator (3),
   - an ultrasonic transmission/reception unit (B), characterized by the device also having
   - a first dead-time element (5) with single dead time ($t_T$),
   - a first gate circuit (9),
   - a first comparator (10),
   - and a counter (11),
   - in which the pulse generator (3) drives the ultrasonic transmission/reception unit (B) and the first dead-time element (5),
   - in which the ultrasonic transmission/reception unit (B) and the first dead-time element (5) drive the first gate circuit (9),
   - in which the first gate circuit (9) drives the first comparator (10),
   - and in which the first comparator (10) drives the counter (11).

9. The device according to Claim 8, which further has

- a second dead-time element (4) with double dead time $(2t_T)$,
- a second gate circuit (12) and
- a memory circuit (13),
- in which the pulse generator (3) additionally drives the second dead-time element (4),
- in which the second dead-time element (4) and the first comparator (10) drive the second gate circuit (12),
- and in which the second gate circuit (12) drives the memory circuit (13).

10. Device according to Claim 8 or Claim 9, which further has

- a third dead-time element (17) with the dead time $(t_i)$,
- an integrator (14),
- a third gate circuit (15) and
- a second comparator (16),
- in which the first dead-time element (5) drives the third dead-time element (17),
- in which the third dead-time element (17) and the integrator (14) drive the third gate circuit (15),
- in which the third gate circuit (15) drives the second comparator (16), and
- in which the first comparator (10) additionally drives the integrator (14).

**Revendications**

1. Procédé de mesure de l'écartement entre un objet et une unité d'émission et de réception d'ultrasons, dans lequel

- l'unité d'émission et de réception d'ultrasons (US) (1) est amenée à émettre une impulsion US,

caractérisé

- en ce que l'instant $t_{e1}$ de réception d'un premier écho US (101) est enregistré et
- en ce que l'instant $t_{e2}$ de réception d'un deuxième écho US (101) succédant au premier écho US (101) est enregistré et la différence de temps $t_{e2} - t_{e1}$ est utilisée pour déterminer l'écartement, dans la mesure où le premier écho US (101) ne se produit pas pendant un intervalle de temps prédéterminé après l'émission de l'impulsion US.

2. Procédé selon la revendication 1, caractérisé en ce que l'instant $t_{e1}$ de réception du premier écho US (101) est utilisé pour déterminer l'écartement, dans la mesure où le premier écho US (101) ne se produit pas pendant l'intervalle de temps prédéterminé.

3. Procédé selon la revendication 1 ou 2, caractérisé en ce que l'intervalle de temps est choisi de manière à être proportionnel au temps mort $(t_T)$ de l'unité d'émission et de réception d'US (1).

4. Procédé selon la revendication 3, caractérisé en ce que l'intervalle de temps correspond au double du temps mort $(2t_T)$.

5. Procédé selon l'une des revendications précédentes, caractérisé

- en ce que d'autres instants de réception $(t_{e3}, t_{e4}...)$ d'autres échos (103, 104 ...) sont enregistrés,
- en ce que les différences de temps entre deux échos respectifs se succédant sont utilisées pour déterminer une différence de temps moyenne,
- en ce que la différence de temps moyenne est utilisée pour déterminer l'écartement.

6. Procédé selon l'une des revendications précédentes, caractérisé

- en ce que d'autres instants de réception d'autres échos sont enregistrés,
- en ce que, lorsque les différences de temps entre deux échos respectifs se succédant présentent un écart, cet écart est enregistré.

**7.** Procédé selon l'une des revendications précédentes, caractérisé

- en ce que l'on effectue un enregistrement lorsqu'un temps de décroissance ($t_A$) spécifique à l'unité d'émission et de réception d'US s'écarte d'un temps de décroissance théorique.

**8.** Dispositif de mesure d'un écartement (A), comprenant

- un impulseur (3)
- une unité d'émission et de réception d'ultrasons (B), caractérisé en ce que le dispositif comprend également
- un premier élément de retard (5) avec un simple temps mort ($t_T$),
- un premier circuit porte (9),
- un premier comparateur (10),
- et un compteur (11),
- dans lequel l'impulseur (3) commande l'unité d'émission et de réception d'ultrasons (B) et le premier élément de retard (5),
- dans lequel l'unité d'émission et de réception d'ultrasons (B) et le premier élément de retard (5) commandent le premier circuit porte (9),
- dans lequel le premier circuit porte (9) commande le premier comparateur (10),
- et dans lequel le premier comparateur (10) commande le compteur (11).

**9.** Dispositif selon la revendication 8, comprenant, en outre,

- un second élément de retard (4) avec un double temps mort ($2t_T$),
- un second circuit porte (12) et
- un circuit de mémoire (13),
- dans lequel l'impulseur (3) commande, en plus, le second élément de retard (4),
- dans lequel le second élément de retard (4) et le premier comparateur (10) commandent le second circuit porte (12),
- dans lequel le second circuit porte (12) commande le circuit de mémoire (13).

**10.** Dispositif selon la revendication 8 ou la revendication 9, comprenant, en outre,

- un troisième élément de retard (17) avec le temps mort ($t_i$),
- un intégrateur (14),
- un troisième circuit porte (15) et
- un second comparateur (16),
- dans lequel le premier élément de retard (5) commande le troisième élément de retard (17),
- dans lequel le troisième élément de retard (17) et l'intégrateur (14) commandent le troisième circuit porte (15),
- dans lequel le troisième circuit porte (15) commande le second comparateur (16), et
- dans lequel le premier comparateur (10) commande, en plus, l'intégrateur (14).

FIG 1

# FIG 2

FIG 3

s3

1

101
102
103
104

2

100a

100    100'    101    102    103  103' 104    105

$t_T$

$2t_T$

202    203   203' 204    205

201    $t_L$

$te_1$    $te_2$    $te_3$    $te_3'$ $te_4$    $te_5$

300

$t_0$

t

FIG 4

FIG 5

FIG 6a

FIG 6b